# EUROPEAN PATENT APPLICATION

(11) **EP 2 166 536 A1**
(43) Date of publication of application: **24.03.2010**
(21) Application number: 09011482.8
(22) Date of filing: 08.09.2009
(51) Int. Cl.: G11B 20/10, G11B 27/02

(54) **Video data processor with frame buffer size adapted to the type of processing**

(30) Priority: 22.09.2008 JP 2008242175
(71) Applicant: Kabushiki Kaisha Toshiba, Minato-ku Tokyo (JP)
(72) Inventor: Satoh, Naoko, Tokyo (JP); Osaki, Yoshiro, Tokyo (JP); Mori, Toshiki, Tokyo (JP); Kimiyama, Kenji, Tokyo (JP); Yamaguchi, Kiyoshi, Tokyo (JP); Shiratori, Masashi, Tokyo (JP); Ushio, Yasuyuki, Tokyo (JP)
(74) Representative: HOFFMANN EITLE

(57) **Abstract**

A video data processor and a video data processing method which uses hardware resources efficiently even when a plurality of processing occurs to video data are performed in parallel is provided. The video data read from a recording medium in playback processing, editing processing, duplication processing, and other process that may be accomplished upon video is outputted to either of two lines by distributor 171. The video data that is outputted is temporarily held by input buffer 172-1, and decoded by decoder 173-1, and outputted to frame buffer 174-1. Frame buffer 174-1 and 174-2 are divided into a plurality of holding areas and these holding areas are dynamically assigned according to processing of playback processing, editing processing, or other processing that may be accomplished upon video. Thereby, the holding areas in frame buffer 174-1 and 174-2 can be used efficiently.

## Description

### CROSS REFERENCE TO RELATED APPLICATION

This application is based upon and claims the benefit of priority from the Japanese Patent Application No. 2008-242175, filed on September 22, 2008, the entire contents of which are incorporated herein by reference.

### FIELD OF THE INVENTION

The present invention relates to a video data processor and a video data processing method having a multitasking feature which performs plural processing of video data in parallel.

### DESCRIPTION OF THE BACKGROUND

In recent years, digitization in the broadcast field progresses increasingly due to spread of ground digital broadcasting and fusion of telecommunication and broadcast. Conventionally, tape has been used for recording of video contents. However, development of video data processors that use semiconductor recording mediums advanced due to digitization in the broadcast field and price decline of the semiconductor recording medium (see JP, P2001-320570A and JP, P2001-298734).

By using the semiconductor recording medium, it becomes possible to perform simultaneously plural processes, such as recording, playback, and editing. This could not be realized in a system which uses the tape. The video data processor can playback or edit video under recording from a portion recorded, for example. The video data processor can transmit other recorded video to other device via a network during recording of the video or can copy other recorded video between medium. Furthermore, the video data processor can edit other video during recording of the video. Thereby, an operator can perform operations that are efficient and shorten the time necessary to accomplish such operations.

However, when performing a plurality of processing simultaneously, efficient use of hardware resources becomes an issue. For this reason, it is desired to have a technique which performs one processing using the smallest possible hardware resources, in addition to a technique for efficiently assigning hardware resources for performing a plurality of processing simultaneously.

### SUMMARY OF THE INVENTION

A purpose of the present invention is to provide a video data processor and a video data processing method which can use hardware resources efficiently when plural processing of video are simultaneously performed.

In order to attain the above-mentioned purpose, the video data processor according to the present invention includes: a reading unit configured to read out video data from a random accessible recording medium in which the video data being encoded per frame and being recorded; a distributor configured to distribute the video data read out from the recording medium into a plurality of lines; a 1st buffer unit provided in each the line and configured to hold temporarily the video data distributed to each the line by the distributor; a decoder provided in each line and configured to decode the video data outputted from the first buffer unit; a 2nd buffer unit having a plurality of holding areas for holding the video data of a predetermined number of frames and being configured to assign the holding areas according to an assignment instruction of holding area for assigning predetermined number of the holding areas according to the type of execution processing and to hold the video data decoded by the decoder temporarily in the holding areas and to output the video data decoded; and a control unit configured to output the assignment instruction of a holding area to the 2nd buffer unit when the execution processing to the video data recorded on the recording medium is requested and to instruct the reading unit to read out the video data when the start of the executive processing request is directed.

A video data processing method according to the present invention includes: assigning predetermined number of holding areas from a plurality of holding areas in a buffer according to the type of executive processing when the executive processing is requested to the video data which being encoded per frame and being recorded on a random accessible recording medium; reading out the video data from the recording medium when start of the executive processing requested is directed; distributing the video data read out to a plurality of lines; temporarily the video data distributed to each line and outputting the video data held; decoding the video data held temporarily and outputted; and temporarily holding the video data decoded in the assigned holding area and outputting the video data held decoded.

### BRIEF DESCRIPTION OF THE DRAWINGS

Fig. 1 is a general view of a video data processor concerning an embodiment.
Fig. 2 is a block diagram of the video data processor shown in Fig. 1.
Fig. 3 is a block diagram of a decoding processing unit.
Fig. 4 is a drawing showing an example of the plurality of assignment holding areas of the frame buffers.
Fig. 5A is a sequence diagram showing playback processing of the video data according to the video data processor shown in Fig. 1.
Fig. 5B is a sequence diagram showing playback processing of the video data according to the video data processor shown in Fig. 1.
Fig. 6 is a drawing showing a management table for processing screen - processing.
Fig. 7 is a drawing showing a management table which manages required area by the processing.
Fig. 8 is a drawing showing a management table which manages area assigned.
Fig. 9 is a drawing showing a management table which manages the processing under execution.
Fig. 10 is a drawing showing a management table which manages each decoded frame.
Fig. 11 is a sequence diagram showing copy processing of the video data according to the video data processor shown in Fig. 1.
Fig. 12 shows a flow chart which judges a decoding position for creating a thumbnail image.
Fig. 13 is a block diagram of a decoding processing unit.
Fig. 14 is a drawing showing a plurality of holding area of the frame buffer before assignment for every kind of executive processing.

### DETAILED DESCRIPTION OF THE INVENTION

Hereinafter, an embodiment of the invention is explained in detail with reference to the drawings.

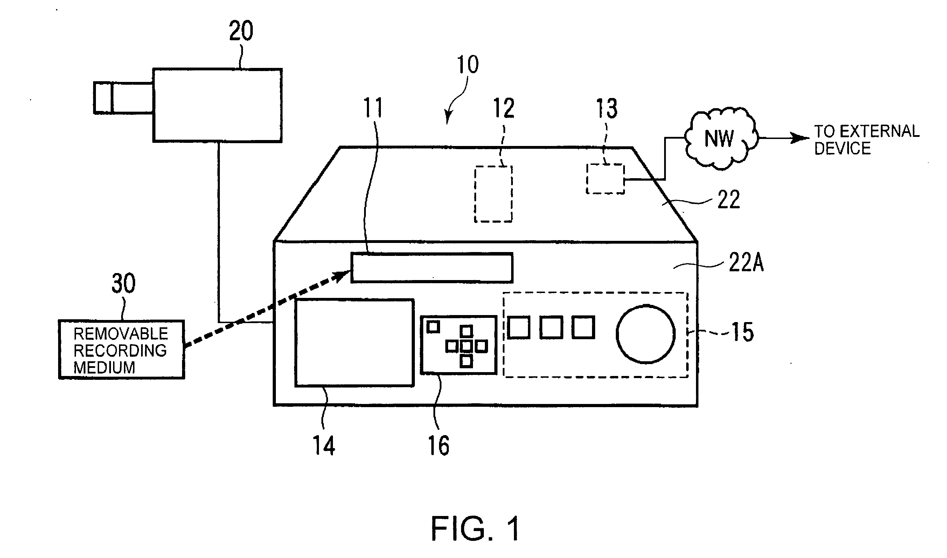

Fig. 1 is a general view of video data processor 10 according to an embodiment of the present invention. Video data processor 10 has housing 22, internal recording medium 12 and network interface 13 inside housing 22. It also has insertion slot 11, display unit 14, video operation unit 15 and screen operation unit 16 at front panel 22A of housing 22. Video data processor 10 shall handle video data of the GOP (Group Of Picture) structure in which 1 GOP comprised 15 frames or any number of frames selected.

Video data processor 10 records video taken by a camera on a recording medium, playbacks, and edits the video data recorded on the recording medium. Furthermore, video data processor 10 copies the recorded video data to an alternative or similar recording medium and transmits the recorded video data to an external device.

Camera 20 is connected to video data processor 10, and the video taken by camera 20 is taken into video data processor 10. The inputted video is recorded on removable recording medium 30 inserted in insertion slot 11 or internal recording medium 12 built into the main body of video data processor 10. The video data recorded on removable recording medium 30 and internal recording medium 12 is transmitted through network interface (NW-I/F) 13 via network NW.

Removable recording medium 30 and internal recording medium 12 uses nonvolatile semiconductor memory, such as flash memory, which affords random access. The flash memory is a rewritable nonvolatile semiconductor memory which has a high speed random access configuration. Unlike the tape or optical disk drive, the flash memory does not have any mechanical movable part therefore and it has excellent vibration resistance. Removable recording medium 30 and video data processor 10 are configured so that the removable recording medium 30 can be attached and detached to video data processor 10.

Display unit 14 includes an LCD (Liquid Crystal Display) for displaying, and a thumbnail image creator unit for making thumbnail image from the video data. Display unit 14 displays a video under recording, a video of the video clip played,back from recording medium 12 and 30, a setup information of video data processor 10, and the thumbnail image of the video clip recorded on recording medium 12, and other relevant information for proper execution of the purpose of the embodiment. Furthermore, display unit 14 displays selectively a processing screen corresponding to playback processing, recording processing, editing processing, copying processing and transmission processing to the video clip recorded on recording medium 12 and 30, respectively. For example, display unit 14 displays the video clip in full screen when the playback processing is performed and displays the video clip by a play list editing screen when the edit processing is performed.

Video operation unit 15 includes a plurality of buttons and a dials. A user can input a playback start instructions of the video clip recorded on recording medium 12 and 30 and a playback stop instructions by operating these buttons and the dial.

Screen operation unit 16 includes a plurality of buttons. The user can input a recording instructions of the image taken by camera 20, a playback request and the playback start instructions for the video clip recorded on recording medium 12 and 30, and access (editing, copying, transmission, etc.) requests and access start instructions to the video clip recorded on the recording medium 12 and 30, by operating those buttons.

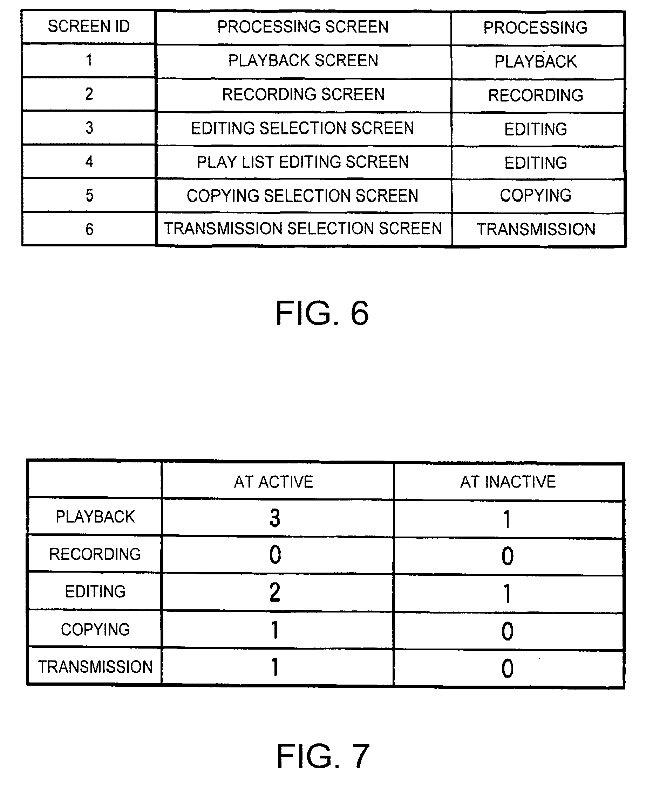

As shown in Fig. 6, a management table of processing screen - processing relates a screen ID and the processing screen with an executive processing. The user can input a selection instruction which chooses the processing screen corresponding to the executive processing by operating the button of screen operation unit 16. Display unit 14 receives the selection instruction and changes a screen displayed to the processing screen corresponding to the selection instruction chosen. At this time, display unit 14 outputs the screen ID of the processing screen corresponding to selection instruction to control section 112 mentioned later.

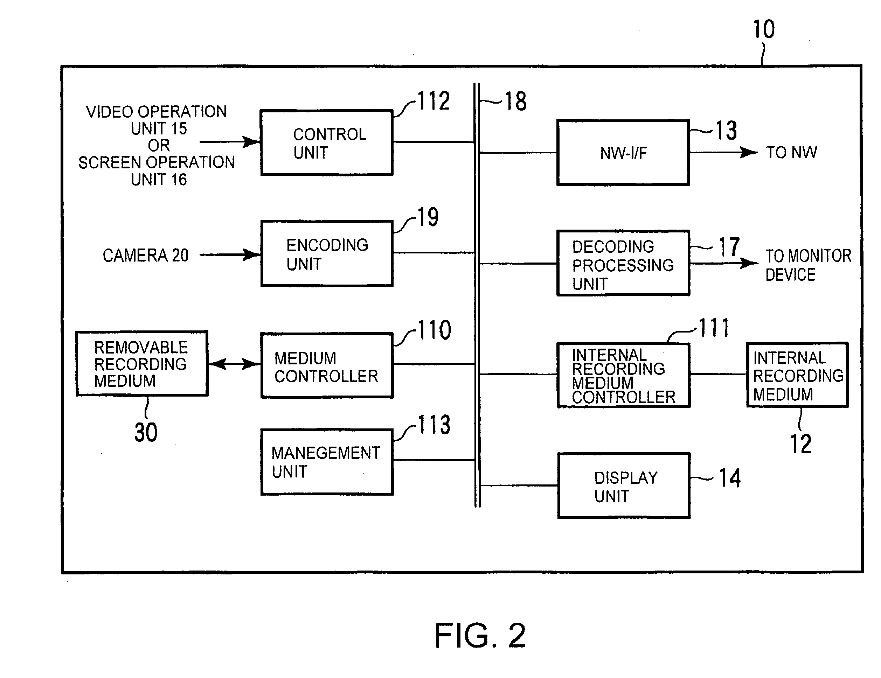

Fig. 2 is a block diagram showing a functional structure of video data processor 10 according to the embodiment.

Video data processor 10 includes control unit 112, encoding unit 19, medium controller 110, removable recording medium 30, management unit 113, NW-I/F 13, decoding processing unit 17, internal recording medium controller 111, internal recording medium 12, display unit 14 and bus 18.

The video taken by camera 20 is encoded into readable video format, such MPEG 2, by encoding unit 19 on a per frame basis, and is supplied to decoding processing unit 17, medium controller 110 or internal recording medium controller 111 via bus 18.

Medium controller 110 processes reading-out and writing-in of video data to removable recording medium 30 by the instructions from control unit 112. Internal recording medium controller 111 processes reading-out and writing-in of the video data to internal recording medium 12 by the instructions from control unit 112. That is, medium controller 110 and internal recording medium controller 111 function as a reading unit which reads out the video data from the recording medium and a writing unit which writes the video data on the recording medium.

Decoding processing unit 17 receives the video data supplied from encoding unit 19 and the video data read out from recording medium 12 and 30. Decoding processing unit 17 decodes the video data under instructions from control unit 112 and simultaneously outputs the decoded video data to display unit 14 or an external monitor device, allowing the video to be view on both display unit 14 and the external monitor device in a selective fashion.

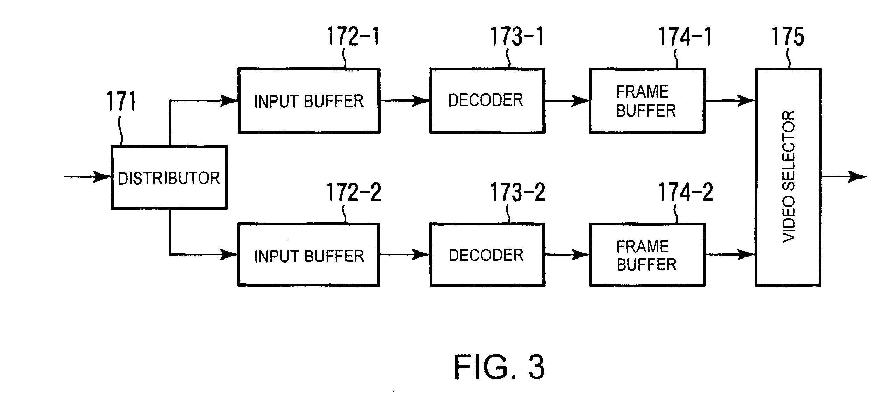

Fig. 3 is a block diagram showing the composition of decoding processing unit 17. Decoding processing unit 17 includes distributor 171, input buffers 172-1 and 172-2, decoders 173-1 and 173-2, frame buffers 174-1 and 174-2, and video selector 175.

Distributor 171 distributes inputted video data through two lines. Input buffer 172-1 and 172-2 temporarily holds the video data distributed by distributor 171 and outputs the video data to decoder 173-1 and 173-2, respectively.

Decoder 173-1 and 173-2 decodes the video data outputted from input buffer 172-1 and 172-2 and outputs the decoded video data to frame buffer 174-1 and 174-2.

Frame buffer 174-1 and 174-2 holds temporarily the decoded video data and outputs the decoded video data. Frame buffer 174-1 and 174-2 includes a plurality of holding areas for holding the video data of 1 GOP, for example, six holding areas, respectively. The holding areas in frame buffers 174-1 and 174-2 are managed in a pair, and are utilized by instructions assigned by control unit 112.

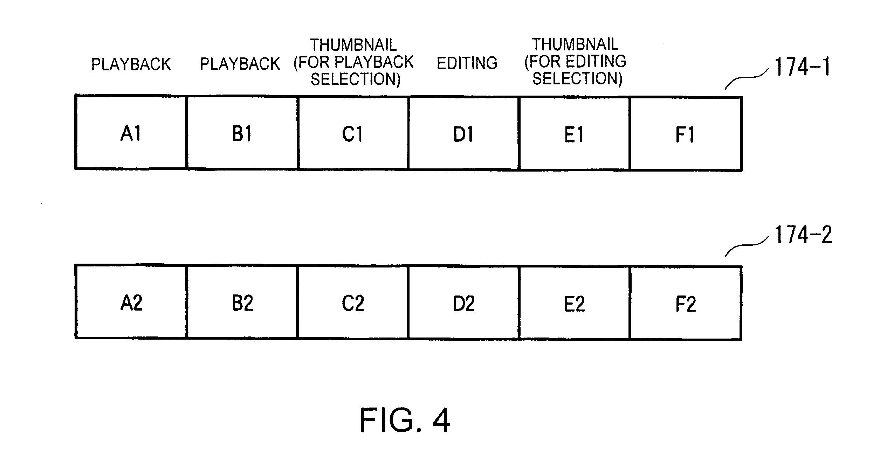

Fig. 4 is a schematic diagram showing an example of assignment of the holding areas in frame buffers 174-1 and 174-2. Fig. 4 shows the composition of the holding areas of frame buffers 174-1 and 174-2 when a playback request and an editing request are inputted by screen operation unit 16. Holding areas A1, B1, A2, and B2 are assigned to hold the video data for playback processing. Holding areas C1 and C2 are assigned to hold the video data for the thumbnail image for playback selection. Holding areas D1 and D2 are assigned to hold the video data for editing processing. Holding areas E1 and E2 are assigned to hold the video data for the thumbnail image for editing selection. Holding areas F1 and F2 are not assigned to any particular or specifically defined use. According to assignment instructions from control section 12, frame buffer 174-1 and 174-2 assigns the holding areas.

Video selector 175 chooses the frame buffer which outputs the video data between frame buffers 174-1 and 174-2 by the instructions from control unit 112. The video data outputted form video selector 175 is inputted into display unit 14 or the external monitor device, and the video is displayed.

Control unit 112 has a CPU (Central Processing Unit) which includes a microprocessor and other parts necessary to accomplish its purpose. When control unit 112 receives the playback request or the access request from video operation unit 16, control unit 112 outputs the instructions to frame buffers 174-1 and 174-2 so as to assign the holding areas dynamically according to each executive processing with reference to the management tables in management unit 113. The management tables are explained in detail later.

When control unit 112 receives the playback start instructions from video operation unit 15, the playback start instructions or the access start instructions from screen operation unit 16, control unit 112 starts the executive processing specified to the video clip recorded on recording medium 12 and 30.

When control unit 112 receives the screen ID from display unit 14, control unit 112 recognizes that the executive processing corresponding to the processing screen changed has been requested.

Next, operation of video data processor 10 is explained. Since the processing to internal recording medium 12 is the same as the processing to removable recording medium 30, the processing is explained about removable recording medium 30 in the following.

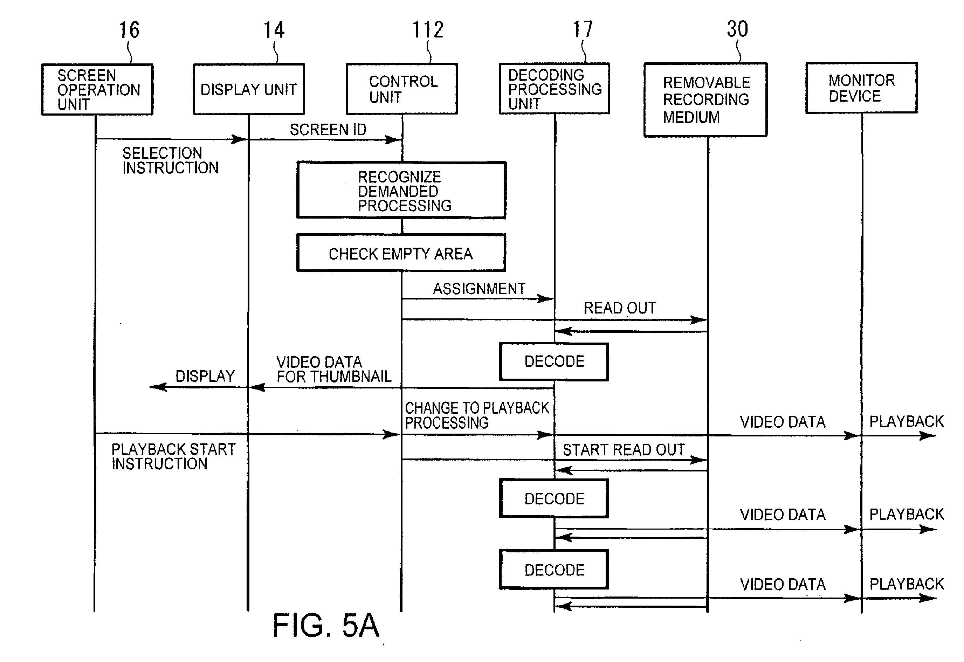

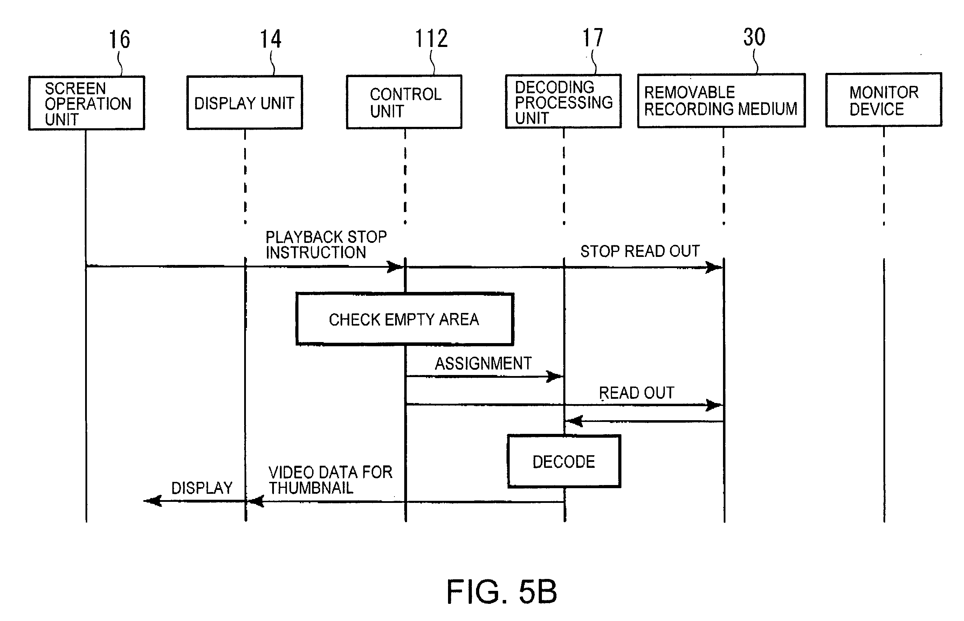

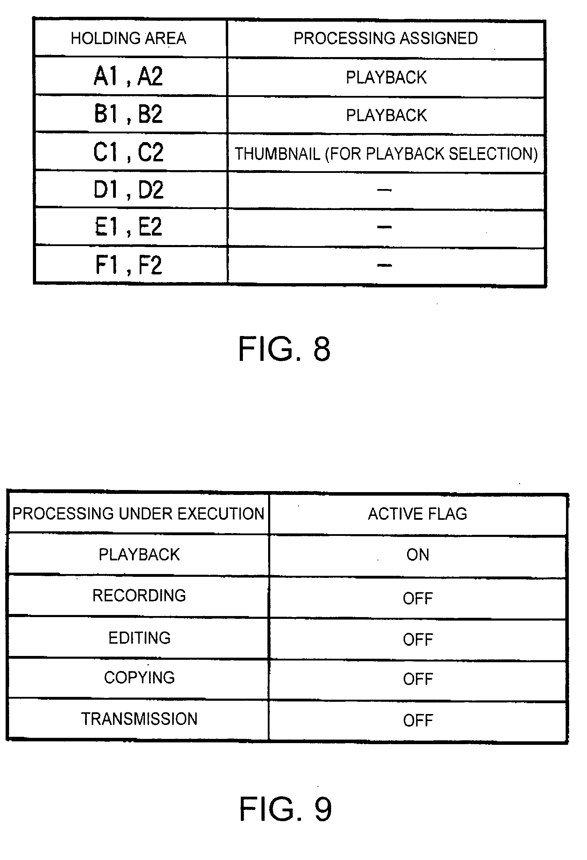

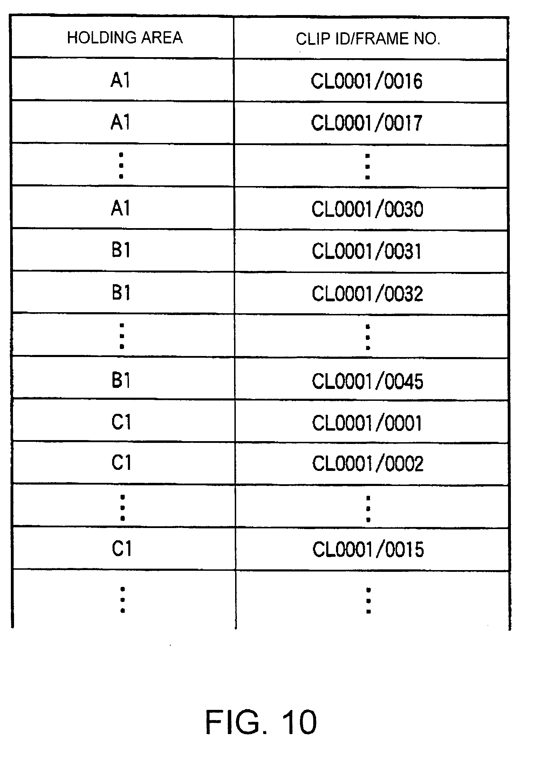

Figs. 5A and 5B are a sequence diagram showing the processing at which video data processor 10 concerning the embodiment plays back the video data. At this time, management unit 113 manages the management tables shown in Fig. 6 - Fig. 10. Fig. 6 shows the management table for the processing screen - processing. This management table relates to the processing screen displayed on display unit 14, the screen ID and the executive processing to the video clip recorded on the recording medium. Fig. 7 shows the management table of a required area by the processing. This management table shows a number of the holding areas which are needed when performing each executive processing. In this embodiment, the number of the needed holding areas differs where executive processing is active and where executive processing is inactive. Fig. 8 shows the management table of the area assigned to the processing. This management table shows the executive processing currently assigned to the holding areas. Fig. 9 shows the management table of the processing under execution. This management table shows whether the executive processing is active or not. Fig. 10 shows the management table of the decoded frame. This management table shows the holding areas and the decoded video data held in the holding areas. Control section 112 updates the management tables shown in Fig. 8 through Fig. 10 as required.

Next, the playback processing is explained. First, the playback request is explained.

In the sequence diagram showing in Fig. 5A, screen operation unit 16 notifies the selection instruction which chooses a playback screen as the processing screen of display unit 14 to display unit 14. When display unit 14 receives this notice, display unit 14 outputs the screen ID corresponding to the playback screen to control unit 112. When control unit 112 receives the screen ID from display unit 14, control unit 112 recognizes that the playback of a specified video clip has been requested with reference to the management table of the processing screen - processing in Fig. 6.

When control unit 112 recognizes that playback is requested, control unit 112 sets ON an active flag of the playback processing in the management table of the processing under the execution shown in Fig. 9 and checks the number of the holding areas needed for playback processing with reference to the management table of the required area by the processing shown in Fig. 7. The playback processing at the time of active needs three holding areas. Control unit 112 confirms that three or more holding areas are empty with reference to the management table of the assigned area shown in Fig. 8, and directs frame buffers 174-1 and 174-2 to assign empty holding areas A1, A2, B1, B2, C1 and C2 to the playback processing. That is, control unit 112 assigns holding areas A1, A2, B1 and B2 to video data for the playback processing, assigns holding areas C1 and C2 to the video data for the thumbnail image for playback selection, and updates the management table of each area assigned. Fig. 8 shows an updated management table of each area assigned.

When control unit 112 assigns holding areas A1, A2, B1, B2, C1, and C2 to the playback processing, control unit 112 instructs medium controller 110 to read the video data of 1 GOP from removable recording medium 30. Control unit 112 instructs medium controller 110 to output the read video data to decoding processing unit 17.

Decoding processing unit 17 receives the video data and decodes the video data by either of decoders 173-1 and 173-2. Here, an example in which distributor 171 distributes the video data to input buffer 172-1 is explained. Decoder 173-1 decodes the video data received from input buffer 172-1 by the instructions from control unit 112. The decoded video data is outputted to frame buffer 174-1 and is held temporarily in holding area C1 assigned for the video data for the thumbnail image. Control unit 112 relates the video data for the thumbnail images: CL0001/0001 - CL0001/ 0015 and holding area C1 and updates the management table of the decoded frame shown in Fig. 10.

Control section 112 instructs frame buffer 174-1 to output the video data of a frame to be made the thumbnail image within the video data held in holding area C1 to video selector 175. Control unit 112 instructs video selector 175 to choose frame buffer 174-1 and output the video data for the thumbnail image to display unit 14. Control section 112 instructs display unit 14 so as to make the thumbnail image creator unit in display unit 14 to create the thumbnail image from the video data. Thereby, standby of the playback processing is completed.

Next, the execution of playback is explained.

The user checks whether the thumbnail image displayed on display unit 14 is an image of a target video clip. When the check is finished, the user inputs the playback start instruction into screen operation unit 16 and requests the playback execution.

When control unit 112 receives the playback start instruction, control unit 112 changes the use of holding area C1 in the management table of the area assigned of Fig. 8 from the holding of the video data for the thumbnail image to the holding of the video data for the playback processing. The instruction given to control unit 112 causes control unit 112 instructs frame buffer 174-1 to output the video data: CL0001/0001 - CL0001/0015 held in holding area C1 to the monitor display via video selector 175.

Then, control unit 112 instructs medium controller 110 to read out next video data from removable recording medium 30 in sequence, and instructs decoding processing unit 17 to decode the read video data. Thereby, holding area A1 holds video data: CL0001/0016 - CL0001/0030, holding area B1 holds video data: CL0001/0031 - CL0001/0045, and holding area C1 holds video data: CL0001/0046 - CL0001/0060. And video data are outputted in sequence from holding areas A1, B1 and C1, and the video is played back through the monitor display.

Next, a playback stop is explained.

When a playback stop instructions is inputted into screen operation unit 16, control unit 112 instructs medium controller 110 to stop reading the video data from removable recording medium 30, and set OFF the active flag of the playback processing in the management table of the processing under the execution shown in Fig. 9. Control unit 112 checks the number of holding areas required at an inactive time of the playback processing with reference to the management table of the required areas by the processing shown in Fig. 7. The playback processing at the inactive time requires one holding area. Control unit 112 directs frame buffer 174-1 to assign one holding area to hold the video data for the thumbnail image with reference to the management table of the area assigned shown in Fig. 8.

When the holding area for the video data for the thumbnail image is assigned, control unit 112 instructs medium controller 110 to read the video data of 1 GOP from removable recording medium 30 and output the read video data to decoding processing unit 17. Control section 112 instructs decoding processing unit 17 to decode the video data received and to hold the decoded video data in a holding area assigned for the video data for the thumbnail images temporarily.
The video data read from the holding area assigned to the video data for the thumbnail images is outputted to display unit 14, the thumbnail image is created by the thumbnail image making unit, and the thumbnail image is displayed on display unit 14.

Next, copying processing is explained.

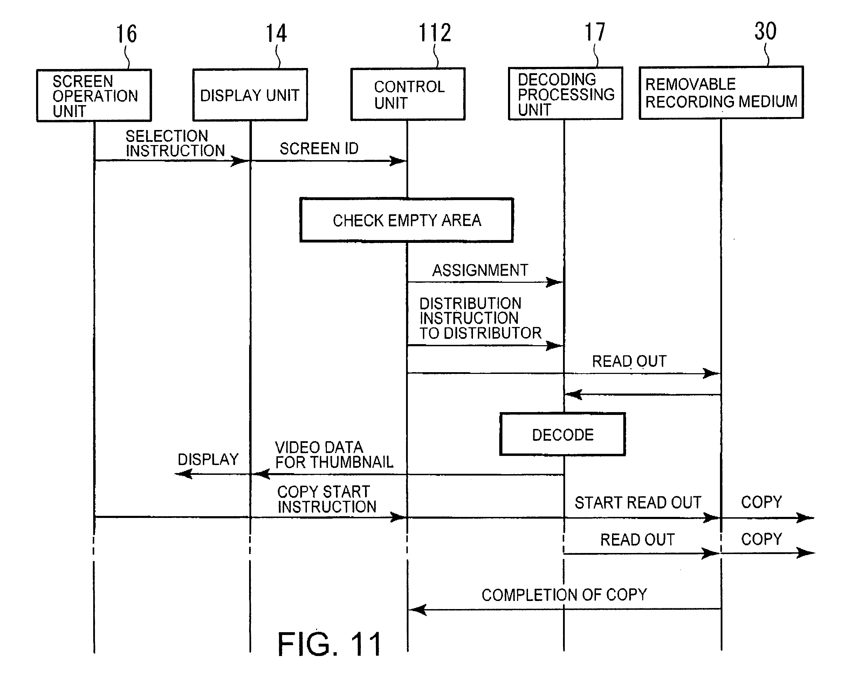

Fig. 11 is a sequence diagram in which video data processor 10 concerning the above-mentioned embodiment copies the video data. Here, the example in which the copying processing is performed during execution of the playback processing shown in Fig. 5 is explained.

First, a request of the copying is explained.

Screen operation unit 16 notifies the selection instruction which chooses the copying selection screen as the processing screen of display unit 14 to display unit 14. When display unit 14 receives this notice, display unit 14 outputs the screen ID corresponding to copying selection screen to control section 12.
When control unit 112 receives the screen ID, control unit 112 recognizes that copying is requested and sets ON the active flag of the copying processing of the management table of the processing under execution shown in Fig. 9. Control unit 112 checks the number of holding areas required at the time of active of the copying processing with reference to the management table of the required area by the processing shown in Fig. 7. The copying processing requires one holding area when active. Control unit 112 additionally confirms that one or more holding area is empty with reference to the management table of the area assigned shown in Fig. 8 and directs frame buffers 174-1 and 174-2 to assign holding areas D1 and D2 to the copying processing. Control unit 112 updates the management table of the areas assigned.

Control unit 112 instructs medium controller 110 to read the video data of 1 GOP from removable recording medium 30. Control unit 112 instructs medium controller 110 to output the read video data to decoding processing unit 17.

Decoding processing unit 17 receives the video data and decodes the video data by utilizing decoder 173-1 or 173-2. Here, since the playback processing is executed in parallel and decoder 173-1 is already in use, distributor 171 distributes the video data to be copied to input buffer 172-2 by the instructions received from control unit 112. Decoder 173-2 decodes the video data received from input buffer 172-2 by the instructions from control unit 112. The decoded video data outputted from decoder 173-2 is held temporarily in holding area D2 as assigned to the copying processing. Control unit 112 relates the video data decoded and holding area D2 and updates the management table of the decoded frame shown in Fig. 10. Control unit 112 instructs frame buffer 174-2 to output the video data held in holding area D2. Control unit 112 instructs video selector 175 to choose frame buffer 174-2 and to output the video data to display unit 14. Control section 112 instructs the thumbnail image making unit of display unit 14 to create the thumbnail image from the video data and instructs display unit 14 to display the thumbnail image. Thereby, the standby of copying processing is completed.

The user checks that the thumbnail image displayed on display unit 14 is an image of a target video clip. When the user confirms that the thumbnail image is the image of the target video clip, the user inputs the copying start instruction by screen operation unit 16.

Next, the execution of copying is explained.

When control unit 112 receives the copying start instruction, control unit 112 instructs medium controller 110 to read the video data from removable recording medium 30 and instructs internal recording medium controller 111 to write this video data to the internal recording medium 12. Thereby, the video clip recorded on removal recording medium 30 is copied to internal recording medium 12.

When copying of the video clip is completed, medium controller 110 notifies a completion of the copying to control unit 112. Thereby, the copying processing is completed.

Processing of the playback request and the copying request above-mentioned are similarly performed in the editing request. Processing of the stop of the playback is similarly performed in the stop of the editing. Also in the editing processing, hardware resources are used effectively by using decoding processing unit 17.

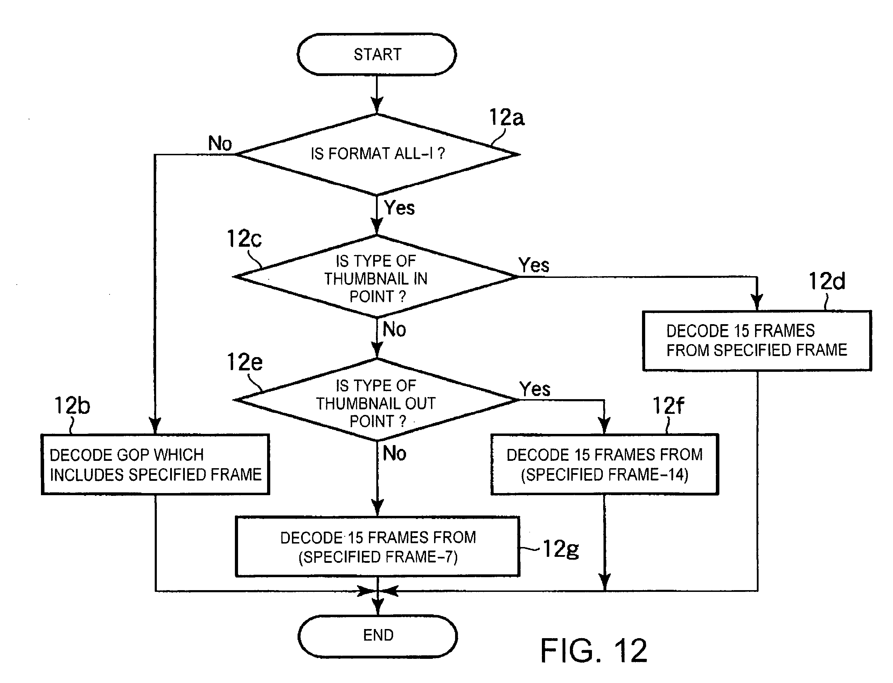

Next, a procedure in which control unit 112 judges the decoding position of the video data for the thumbnail image is explained with reference to Fig. 12. Fig. 12 shows a flow chart in which control unit 112 judges the decoding position of the video data for the thumbnail image in video data processor 10 concerning the embodiment.

Control unit 112 judges the decoding position based on a format of the picture which constitutes GOP structure and a type of the thumbnail image to be created. When control unit 112 judges the decoding position, control unit 112 instructs decoder 173-1 and 173-2 to decode the video data from the judged position.

First, control unit 112 judges whether the format of the picture which constitutes the GOP structure of the video data is Long-GOP or All I-frame (Step 12a).

When the format of the picture is Long-GOP (Step 12a is No), control unit 112 instructs decoder 173-1 and 173-2 decode the video data of 1 GOP which contains a specified frame (Step 12b).

When the format of the picture is All I-frame (Step 12a is Yes), control unit 112 judges the decoding position based on the type of thumbnail image to be created. The decoding position changes according to the position of the frame specified in order to display the thumbnail image. Control section 112 judges whether the type of the thumbnail image to be created is an IN point (Step 12c). When the type of the thumbnail image is the IN point (Step 12c is Yes), control unit 112 instructs decoder 173-1 and 173-2 to decode the video data of 15 frames from the specified frame (Step 12d).

When the thumbnail type is not the IN point (Step 12c is No), control unit 112 judges whether the thumbnail type is an OUT point (Step 12e). When the thumbnail type is the OUT point (Step 12e is Yes), control unit 112 instructs decoder 173-1 and173-2 to decode the video data of 1 GOP from the frame position which returned 14 frames from the specified frame(Step 12f).

When the thumbnail type is not the OUT point (Step 12e is No), considering that the thumbnail type is a shot mark, control unit 112 instructs decoder 173-1 and 173-2 to decode the video data of 1GOP from the frame position which returned seven frames from the specified frame (Step 12g).

Thus, even if the format of the picture which constitutes the GOP structure of the video data is Long-GOP or All I-frame, control unit 112 instructs decoder 173-1 and 173-2 to decode the video data of 1 GOP containing the specified frame and instructs frame buffer 174-1 and 174-2 to hold the video data for the thumbnail image in holding area.

As mentioned above, in the video data processor concerning the embodiment, the inside of frame buffer 174-1 and 174-2 is divided into a plurality of holding areas. When the playback of a video clip recorded on removable recording medium 30 is required, control unit 112 checks the number of holding areas required at the active time and the inactive time of the playback processing and directs frame buffer 174-1 and 174-2 to assign the required number of holding areas for playback processing dynamically to the plurality of holding areas. Thereby, the holding area in frame buffer 174-1 and 174-2 can be used common to different processing and holding areas can be used efficiently.

In the above-mentioned embodiment, decoding processing unit 17 has two decoding lines for video data. Each decoder can be utilized independent of the each other thus decoding even if one decoder is in use. For this reason, as explained in the above-mentioned embodiment, even if the playback processing is executed in one line, the copying processing can be executed simultaneously in another line.

In the above-mentioned embodiment, if the playback start instruction is received, the holding area assigned to the video data for the thumbnail image is changed to the video data for playback processing. Thereby, since the holding area for the video data for the thumbnail images for the playback selection is used as the holding area for the video data for the playback processing, the holding areas of frame buffer 174-1 and 174-2 can be utilized more efficiently.

Therefore, according to the present invention, the video data processor and the video data processing method which use hardware resources efficiently when performing plural processing to the video data in parallel, can be provided.

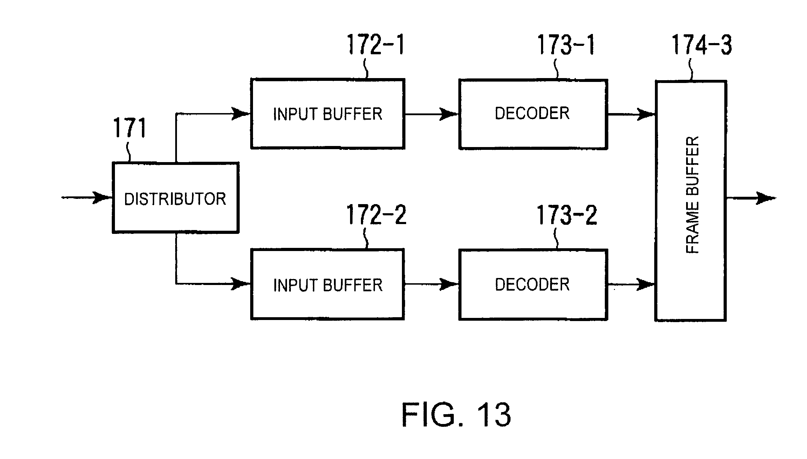

This invention is not limited to the above-mentioned embodiment. For example, in the above-mentioned embodiment, a case that two frame buffers 174-1 and 174-2 are installed and one of frame buffers is chosen by video selector 175 to output the video data is explained. However, even if only one frame buffer 174-3 is installed and video selector 175 is not installed as shown in Fig. 13, hardware resources can be efficiently utilized similarly. In this case, control unit 112 instructs frame buffer 174-3 to select and output the video data suitable for the executive processing under execution from the video data held in a plurality of holding areas.

In the above-mentioned embodiment, the example which has two decoding lines is explained; however, it is possible to accomplish the above by with one decoding line. Simply states one input buffer and one decoder may be utilized, respectively. However, in this configuration the decoder processing speed is more than twice the processing speed of decoder 173-1 and 173-2.

The number of decoding lines may be three or more.

The above-mentioned embodiment explains a situation in which various executive processing is performed to the video clip recorded on removable recording medium 30; moreover, various executive processing can be performed to the video clip recorded on internal recording medium 12.

The embodiment explains the example in which one removable recording medium 30 and one internal recording medium 12 are provided, however, the number of the recording medium is not restricted to one.

The above-mentioned embodiment explains a situation in which the video data and the control signal are transmitted by bus 18; however, the video data and the control signal may be transmitted by different buses, respectively.

The above-mentioned embodiment explains a situation in which manages the active state and inactive state of the processing under the execution, however, it is not necessary to manage these states. In this case, the management table of the processing under execution and the classification of the inactive time and the active time in the management table of the required area by processing becomes unnecessary.

The input of the playback request and the access request in the above-mentioned embodiment can also be performed by methods not accomplished through direct entry from screen operation unit 16 or the display screen selection of display unit 14. For example, the thumbnail image for selection of the video clip is separately recorded on the recording medium. When the recording medium is connected to the main body of the video data processor, the thumbnail image for selection is displayed on display unit 14. This configuration also allows the executive processing to be requested by user's selection of this thumbnail image for selection.

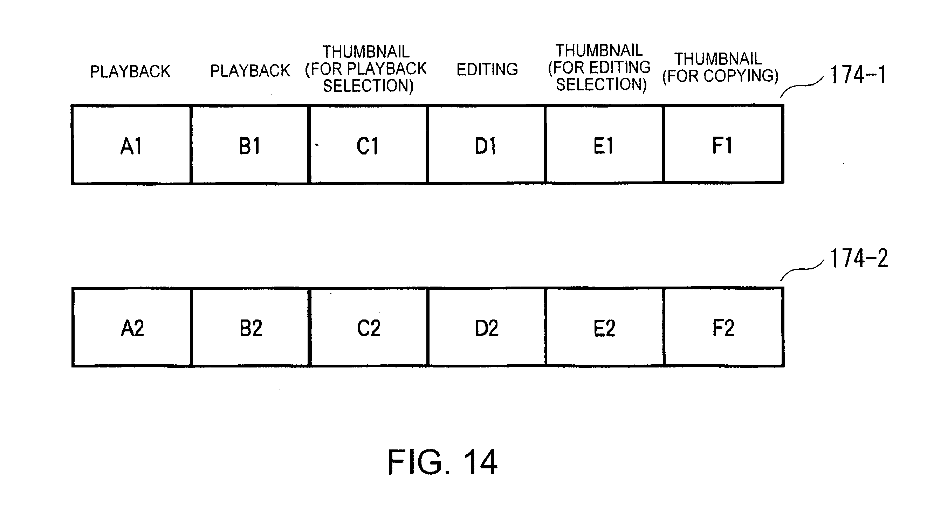

In the above-mentioned embodiment, control unit 112 assigns the use dynamically to the holding areas. However, the holding areas in frame buffer 174-1 and 174-2 may be divided beforehand for every kind of executive processing, as shown in Fig. 14. In such case shown in Fig. 14, holding areasA1, B1, A2, and B2 are assigned beforehand to hold the video data for the playback processing, holding areas C1 and C2 are assigned beforehand to hold video data for the thumbnail image for the playback selection, holding areas D1 and D2 are assigned beforehand to hold video data for the editing processing, holding areas E1 and E2 are assigned beforehand to hold video data for the thumbnail image for the editing selection, and holding areas F1 and F2 are assigned beforehand to hold video data for the copying processing. Under these circumstances, since input buffers 172-1 and 172-2 and decoders 173-1 and 173-2 of decoding processing unit 17, are shared by each executive processing, efficient use of hardware resources can be performed.

In the above-mentioned embodiment, the holding areas in frame buffers 174-1 and 174-2 are managed as a pair. However, each holding area can also be assigned to different uses in frame buffers 174-1 and 174-2.

In addition, the present invention is not limited to the above-mentioned embodiment as it is, and in a practical stage, components can be changed without departing from the scope of the invention.

## Claims

1. Video data processor, comprising:
a reading unit configured to read video data from a random accessible recording medium in which said video data is encoded per frame and being recorded;
a distributor configured to distribute said video data read from said recording medium into a plurality of lines;
a 1st buffer unit provided in each said line and configured to hold temporarily said video data distributed to each said line by said distributor;
a decoder provided in each said line and configured to decode said video data outputted from said first buffer unit;
a 2nd buffer unit having a plurality of holding areas for holding said video data of a predetermined number of frames and being configured to assign said holding areas according to assignment instruction of holding area for assigning predetermined number of said holding areas according to the type of execution processing and hold said video data decoded by said decoder temporarily in said holding areas and output said video data decoded; and
control unit configured to output said assignment instruction of holding area to said 2nd buffer unit when said execution processing to said video data recorded on said recording medium is requested and to instruct said reading unit to read out said video data when the start of said executive processing requested is directed.

2. The video data processor according to claim 1, wherein
said 2nd buffer unit includes a buffer provided in each said line and having said plurality of holding areas and a video selector which chooses said buffer which outputs said video data decoded among said buffers; and
said control unit instructs said video selector to choose said buffer which outputs said video data according to said executive processing.

3. The video data processor according to claim 1, wherein
said executive processing contains any one of playback processing, editing processing, copying processing, or transmission processing for said video data recorded on said recording medium.

4. The video data processor according to claim 1, further comprising:
a display unit configured to create a thumbnail image and display said thumbnail image created;
wherein,
said decoding unit is configured to decode said video data outputted from said 1st buffer unit to create the video data for said thumbnail image; and
said control unit is configured to, when said execution processing is requested, direct said 2nd buffer unit to assign said holding area for holding of said video data for said thumbnail image, causing said 2nd buffer unit to hold said video data for said thumbnail image in said holding area as assigned for said video data for said thumbnail image and output said video data for said thumbnail image in said holding area to said display unit.

5. The video data processor according to claim 4, wherein
when said executive processing is playback processing or editing processing,
said control unit is configured to, when start instruction of said executive processing is received, after instructing said 2nd buffer unit output said video data for said thumbnail image from said holding area for said video data for said thumbnail image, instruct said 2nd buffer unit to hold said video data decoded temporarily in said holding areas as assigned for executive processing and output said video data decoded.

6. The video data processor according to claim 4, wherein
when said executive processing is playback processing or editing processing,
said control unit configured to, when the stop instruction of said executive processing is received,
instruct said 2nd buffer unit to assign said holding area for holding said video data for said thumbnail image at the time of stop,
instruct said decoding unit to decode said video data for said thumbnail image at the time of stop, and
instruct said 2nd buffer unit to hold said video data for said thumbnail image in said holding area assigned for said video data for said thumbnail image and output said video data for said thumbnail image held in said holding area to said display unit.

7. The video data processor according to claim 1, further comprising:
a display unit configured to display processing screen corresponding to type of said executive processing selectively; and
an instruction input unit configured to select and direct said processing screen,
wherein
said control unit is configured to, when said processing screen is selected, recognize that said executive processing corresponding to said processing screen is requested.

8. The video data processor according to claim 1, wherein
said control unit is configured to direct said 2nd buffer unit to assign predetermined number of said holding areas according to type of said executive processing from said plurality of holding areas dynamically.

9. The video data processor according to claim 1, wherein
said holding areas of said 2nd buffer unit are divided beforehand according to type of said executive processing.

10. The video data processor according to claim 1, wherein
said control unit is configured to direct said 2nd buffer unit to assign said holding area with reference to status of use of said holding areas.

11. The video data processor according to claim 1, wherein
said video data processor is configured so that said recording medium can be detached and attached.

12. The video data processor according to claim 1, wherein
said video data has GOP (Group Of Pictures) structure, and
said holding area has capacity to hold said video data of 1 GOP.

13. The video data processor according to claim 4, wherein
said video data has GOP (Group Of Pictures) structure,
said holding area has capacity to hold said video data of 1 GOP, and
said control unit is configured to, with respect to said video data outputted from said 1st buffer unit,
determine a decoding position based on format of picture which constitutes said GOP structure, and type of said thumbnail image created, and instruct said decoding unit to decode said video data of 1 GOP from said decoding position, and to hold said video data decoded in said holding area.

14. The video data processor according to claim 13, wherein
when said format of said picture which constitutes said GOP structure is Long-GOP,
said control unit is configured to instruct said decoding unit to decode said video data of 1 GOP containing a frame specified in order to display said thumbnail image.

15. The video data processor according to claim 13, wherein
when said picture which constitutes said GOP structure is ALL I frame,
said control unit is configured to make said decoding unit change said decoding position according to the position of specified frames as specified to display said thumbnail image and decode said video data of 1 GOP containing said specified frame.

16. A video data processing method, comprising:
assigning a predetermined number of holding areas from a plurality of holding areas in a buffer according to the type of executive processing when said executive processing is requested to the video data which being encoded per frame and being recorded on a random accessible recording medium;
reading out said video data from said recording medium when said start of said executive processing is directed;
distributing said video data read out to a plurality of lines;
holding temporarily said video data distributed to each said line and outputting said video data held;
decoding said video data held temporarily and outputted; and
temporarily holding said video data decoded in said assigned holding area and outputting said video data held decoded.
